# EUROPÄISCHE PATENTSCHRIFT

(11) **EP 0 479 134 B1**
(45) Veröffentlichungstag und Bekanntmachung des Hinweises auf die Patenterteilung: **24.11.1993**
(21) Anmeldenummer: 91116446.5
(22) Anmeldetag: 26.09.1991
(51) Int. Cl.: B62D 27/06

(54) **Fahrgestell für Kraftfahrzeuge oder Anhänger**
Chassis for motor vehicles or trailers
Châssis pour véhicules à moteur ou remorques

(30) Priorität: 01.10.1990 DE 9013691 U
(43) Veröffentlichungstag der Anmeldung: 08.04.1992
(73) Patentinhaber: AL-KO KOBER AG, D-89359 Kötz (DE)
(72) Erfinder: Müller, Andreas, W-8870 Günzburg (DE)
(74) Vertreter: Ernicke, Hans-Dieter, Dipl.-Ing.

(56) Entgegenhaltungen:
- DE-C- 3 120 775
- DE-U- 7 701 586

## Beschreibung

Die Erfindung betrifft ein Fahrgestell für Kraftfahrzeuge oder Anhänger mit den Merkmalen im Oberbegriff des Hauptanspruchs.

Ein solches Fahrgestell ist aus der DE-C 3 120 775 bekannt. Für die Verbindung zwischen den Längsträgern eines Anhängers und des Fahrzeugaufbaus sind Flanschplatten vorgesehen, die über napfförmige Profilierungen und jeweils eine Schraube mit dem Längsträger verbunden sind. Die Profilierungen haben eine kreisrunde Form und sind an der Befestigungsstelle doppelt vorhanden. In der Praxis hat sich herausgestellt, daß eine solche Verbindungsform noch kein Optimum hinsichtlich Stabilität und Wirtschaftlichkeit darstellt.

Aus dem DE-U 7 701 586.2 ist es ferner bekannt, mit gleichartigen Profilierungen Achsböcke mit den Längsträgern zu verbinden.

Es ist daher Aufgabe der vorliegenden Erfindung, eine Möglichkeit zur Erhöhung der Stabilität und zur Verbesserung der Wirtschaftlichkeit solcher Verbindungen aufzuzeigen.

Die Erfindung löst dies Aufgabe mit den Merkmalen im Hauptanspruch.
Erfindungsgemäß sind die napfförmigen Profilierungen nicht mehr kreisrund, sondern haben eine längliche Form. Hierdurch bieten sie einen höheren Formwiderstand und lassen sich auch als Verdrehsicherung einsetzen. Dies ermöglicht es, statt mit einer doppelten nur mit einer einfachen Anordnung der ineinandergreifenden napfförmigen Profilierungen auszukommen. Entsprechend geringer ist der Bau- und Materialaufwand. Auch die Zahl der Schraubverbindungen kann reduziert werden. Insgesamt läßt sich das Fahrgestell hierdurch kostengünstiger herstellen.

Im bevorzugten Ausführungsbeispiel der Verbindung von Flanschplatten mit den Längsträgern genügt für die zu verbindenden Teile jeweils nur eine napfförmige Profilierung und nur ein Spannelement. Hier kommt besonders auch der Vorteil der Verdrehsicherung zum Tragen.

Die napfförmigen Profilierungen tragen noch in anderer Hinsicht zur Verbesserung des Fahrgestells bei.
Insbesondere Anhänger-Fahrgestelle sollen wegen der abnehmenden Fahrzeuggewichte und der entsprechend reduzierten zulässigen Anhängelasten ständig leichter werden. Zu diesem Zweck werden immer dünnere Bleche als Längsträgermaterial eingesetzt, was Probleme mit der Stabilität aufwerfen kann. Die längliche und insbesondere ovale Form der Profilierungen ermöglicht eine verformungsgünstigere Einleitung und Übertragung der Stützkräfte. Die eigene Formstabilität der in die dünnen Bleche eingeformten Profilierungen ist dabei ebenfalls höher. Damit lassen sich durch dünnere Bleche die Gewichte reduzieren, ohne daß die Stabilität leidet. Dies ist besonders für Flanschpatten zur Verbindung von Längsträgern und Fahrzeugaufbau bedeutsam.

Das erfindungsgemäße Fahrgestell läßt sich mit Vorteil für Kraftfahrzeuge, z.B. Sonderfahrgestelle, Wohnmobile etc. und speziell für Fahrzeuganhänger mit Vorteil einsetzen. Als Anwendungsbereich kommen im einzelnen außer den besagten Flanschplatten jegliche Beschlagteile, wie Standfüße, Ausleger, Achsböcke etc. in Frage. Die Napfverbindungen eignen sich gleichermaßen auch zur Verbindung der Teile von Längsträgern, wie Deichselholm, Längsholme etc.

Die Erfindung ist in den Zeichnungen beispielsweise und schematisch dargestellt. Im einzelnen zeigen:
- Fig. 1 und 2:: ein Anhänger-Fahrgestell mit einem über Flanschplatten verbundenen Fahrzeugaufbau in Seitenansicht und Draufsicht,
- Fig. 3:: einen Schnitt durch die Befestigungsstelle der Flanschplatte an den Längsträgern gem. Schnittlinie III von Fig. 1 und
- Fig. 4 und 5:: Ansichten der Flanschverbindung entspr. Pfeilen IV und V von Fig. 3.

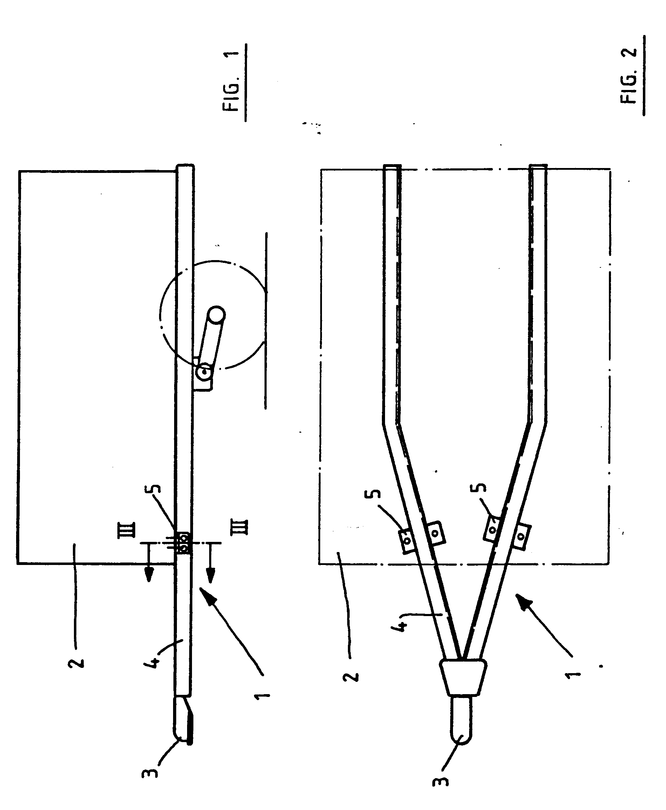

Fig. 1 und 2 zeigen ein bevorzugtes Ausführungsbeispiel in Form eines Anhänger-Fahrgestells (1), an dessen Längsträgern (4) ein Fahrzeugaufbau (2) an verschiedenen Stellen mit Hilfe von Flanschplatten (5,6) verschraubt ist. Die Flanschplatten (5) befinden sich beispielsweise im Deichselbereich der Längsträger (4) und in Nachbarschaft zur Anhängerkupplung (3). In Fig. 2 sind nur zwei der möglichen Montagestellen dargestellt.

Unter Längsträgern (4) sind sämtliche Bauteile zu verstehen, die tragende Funktion für das Fahrgestell (1) haben. In der Regel sind dies bei den derzeitigen Fahrgestell-Konstruktionen die in Längsrichtung sich erstreckenden Bauteile, wie Zuggabel- oder Deichselholme oder Längsholme.

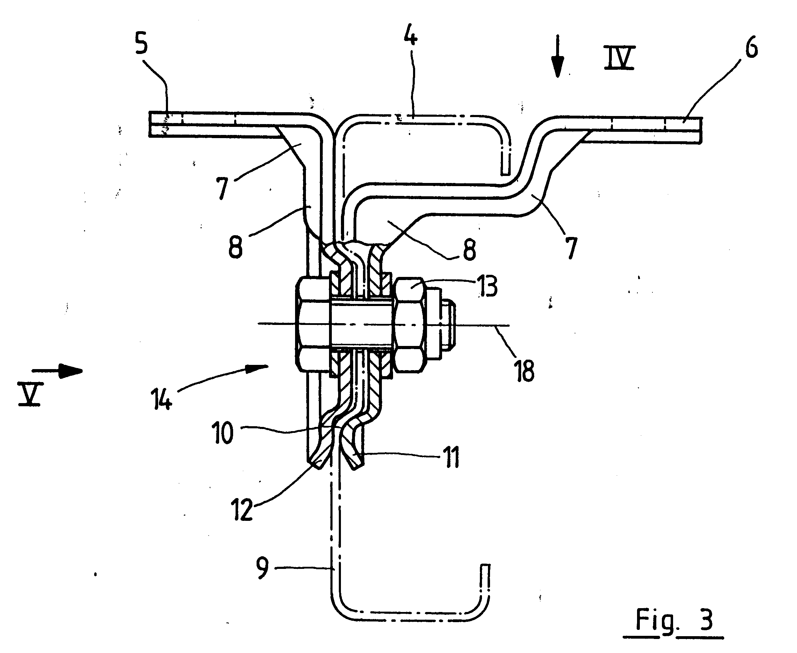

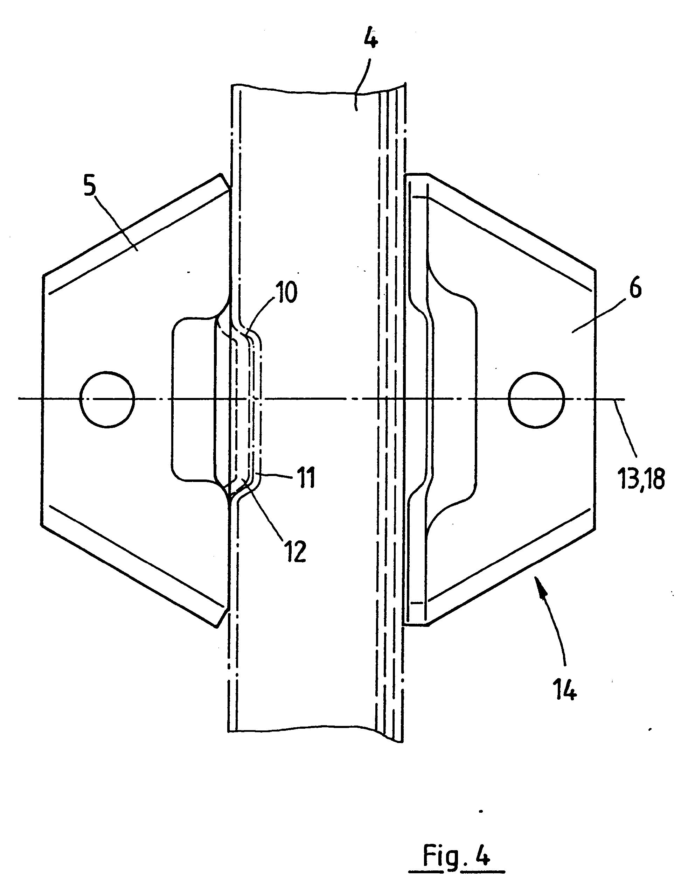

Wie Fig. 3 - 5 näher erläutern, bestehen die Flanschplatten (5,6) aus jeweils einem Winkelbeschlag (7). Die Oberfläche der Flanschplatten (5,6) schließt bündig mit dem Obergurt des im Querschnitt C-förmigen Längsträgers (4), hier ein Längsholm, ab und bieten eine gemeinsame Auflagefläche für den Fahrzeugaufbau (2). In diesem Bereich sind die Flanschplatten (5,6) mit dem Boden des Fahrzeugaufbaus (2) verschraubt.

Die vertikalen Schenkel (8) der Flanschplatten (5,6) sind mit dem Steg (9) des Längsträgers (4) formschlüssig verbunden. Hierzu weisen die Schenkel (8) und der Steg (9) jeweils eine napfförmige Profilierung (10,11,12) auf. Die Profilierungen (10,11,12) greifen formschlüssig ineinander, wobei sie sich mit ihren schrägen Wänden aneinander abstützen. Im flachen Bodenbereich besteht etwas Luft, damit die Napfverbindung durch eine Schraube (13) oder ein sonstiges geeignetes Spannelement, beispielsweise auch eine Niete, gespannt werden kann.

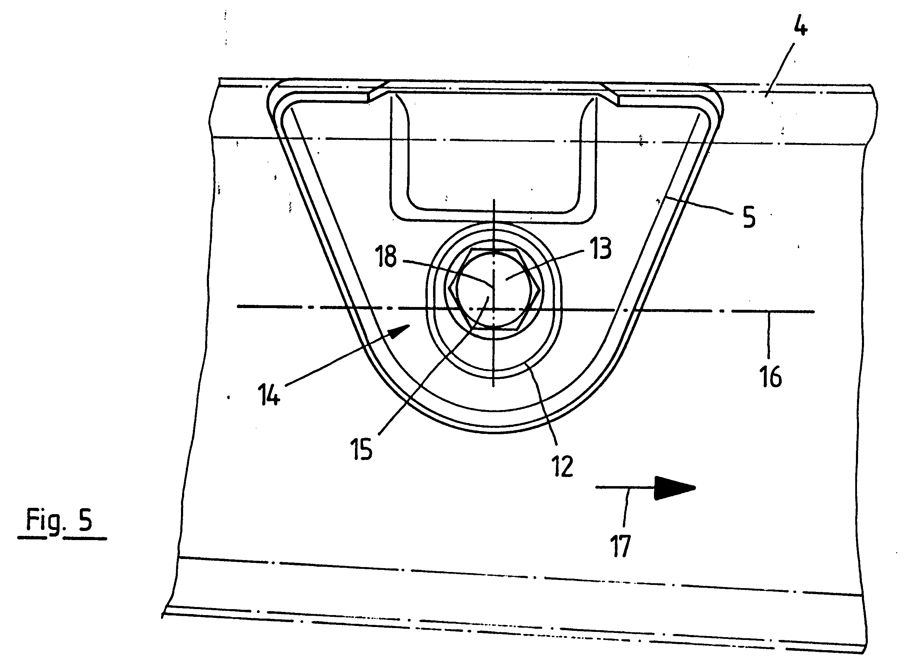

Im Gegensatz zum Stand der Technik haben die napfförmigen Vertiefungen (10,11,12) eine längliche, insbesondere ovale Form, wie das aus Fig. 3 und 5 erkennbar ist. Die Profilierungen (10,11,12) sind dabei mit ihrer Längsachse quer zur Längsachse (17) der Längsträger (4) ausgerichtet. Sie stehen damit im normalen Betrieb des Fahrgestells senkrecht. In diese Richtung verlaufen auch die normalerweise von den Flanschplatten (5,6) vom Längsträger (4) auf den Fahrzeugaufbau (2) zu übertragenden Kräfte.

Die länglichen Profilierungen (10,11,12) sind in der Höhe so angeordnet, daß sich das Napfzentrum (15), d.h. die Mitte in Napflängsrichtung, sich im Bereich der neutralen Achse (16) des Längsträgers (4) befindet. Die Kraftübertragung zwischen Längsträger (4) und Flanschplatten (5,6) findet damit im biegeneutralen Bereich statt, wobei die längliche Form der Prfofilierungen (10,11,12) eine verformungsneutrale Krafteinleitung begünstigt.

Die Achse (18) der Schraube (13) verläuft nicht durch den Napfmittelpunkt (15), sondern ist vertikal nach oben zum Obergurt des Längsträgers (4) versetzt angeordnet. Die Beilagscheiben bzw. der Schraubenkopf und die Mutter wandern dadurch nach oben zum Napfrand. Dies ist günstig für die Aufnahme der Zugkräfte und die gegenseitige Verpressung der schrägen Profilierungswände im oberen Randbereich.

Die länglichen Profilierungen (10,11,12) haben durch ihre Formgebung darüber hinaus die Funktion einer Verdrehsicherung. Dies ermöglicht im Gegensatz zum Stand der Technik die Anordnung von jeweils nur einer Profilierung (10,11,12) in den zu verbindenden Teilen (4,5,6) an der Befestigungsstelle (14). So ist auch nur noch eine Schraubverbindung (13) erforderlich.

Trotz dieser Verringerung der Profilierungszahl und der Schrauben (13) ist es möglich, die Blechdicke des Längsträgers (4) zu verringern auf beispielsweise 2 mm. Die Gewichts-, Wank- und sonstigen Kräfte können ohne Stabilitäts- und Sicherheitseinbußen zwischen Fahrgestell (1) und Anhängeraufbau (2) übertragen werden.

Die Verringerung der Zahl an Profilierungen (10,11,12) und Schrauben (13) an einer Verbindungsstelle (14) ist auch bei anderen Beschlagteilen möglich. An manchen Befestigungsstellen waren bislang drei oder vier solcher Napfverbindungen. Deren Zahl läßt sich nun ebenfalls reduzieren.

## Patentansprüche

1. Fahrgestell für Kraftfahrzeuge oder Anhänger mit einem oder mehreren Längsträgern (4), an denen Beschlagteile (5,6), insbesondere Flanschplatten für Fahrzeugaufbauten, mittels formschlüssig ineinandergreifender, napfförmiger Profilierungen (10,11,12) mit Spannelementen (13), insbesondere Schrauben, befestigt sind, dadurch **gekennzeichnet,** daß die napfförmigen Profilierungen (10,11,12) eine längliche Form aufweisen.

2. Fahrgestell nach Anspruch 2, dadurch **gekennzeichnet,** daß die napfförmigen Profilierungen (10,11,12) quer zur Längsachse (17) des Längsträgers (4) ausgerichtet sind.

3. Fahrgestell nach Anspruch 1 oder 2, dadurch **gekennzeichnet,** daß die napfförmigen Profilierungen (10,11,12) eine ovale Form haben, wobei das Napfzentrum (15) im Bereich der neutralen Achse (16) des Längsträgers (4) liegt.

4. Fahrgestell nach Anspruch 1, 2 oder 3, dadurch **gekennzeichnet,** daß das Spannelement (13) versetzt zum Napfzentrum (15) angeordnet ist.

5. Fahrgestell nach einem oder mehreren der Ansprüche 1 bis 4, dadurch **gekennzeichnet,** daß an der Befestigungsstelle (14) die zu verbindenden Teile (4,5,6) jeweils nur eine napfförmige Profilierung (10,11,12) und nur ein Spannelement (13) aufweisen.

## Claims

1. Chassis for motor vehicles or trailers, having one or more longitudinal bearers (4) to which there are secured, by means of clamping elements (13), in particular screws, fitting parts (5, 6), in particular flange plates for vehicle superstructures, by means of cup-shaped profiled sections (10, 11, 12) which engage into one another in form-fitting manner, characterized in that the cup-shaped profiled sections (10, 11, 12) have an elongate shape.

2. Chassis according to Claim 2, characterized in that the cup-shaped profile sections (10, 11, 12) are aligned transversely with respect to the longitudinal axis (17) of the longitudinal bearer (4).

3. Chassis according to Claim 1 or 2, characterized in that the cup-shaped profiled sections (10, 11, 12) have an oval shape, the cup centre (15) lying in the region of the neutral axis (16) of the longitudinal bearer (4).

4. Chassis according to Claim 1, 2 or 3, characterized in that the clamping element (13) is arranged offset with respect to the cup centre (15).

5. Chassis according to one or more of Claims 1 to 4, characterized in that at the securing point (14) the parts (4, 5, 6) to be connected have in each case only one cup-shaped profiled section (10, 11, 12) and only one clamping element (13).

## Revendications

1. Châssis pour véhicules automobiles ou remorques, comportant une ou plusieurs membrures longitudinales (4), sur lesquelles sont fixées des garnitures (5,6), notamment des plaques formant brides pour des carrosseries de véhicules, au moyen de profilés en forme de boutons (10,11,12) qui s'engagent les uns dans les autres selon une liaison par formes complémentaires, à l'aide d'éléments de serrage (13), notamment des boulons, caractérisé par le fait que les éléments profilés en forme de boutons (10,11,12) possèdent une forme allongée.

2. Châssis suivant la revendication 1, caractérisé par le fait que les éléments profilés en forme de boutons (10,11,12) sont orientés transversalement par rapport à l'axe longitudinal (17) de la membrure longitudinale (4).

3. Châssis suivant la revendication 1 ou 2, caractérisé par le fait que les éléments profilés en forme de boutons (10,11,12) possèdent une forme ovale, le centre (15) d'un bouton étant situé dans la zone de l'axe neutre (16) de la membrure longitudinale (4).

4. Châssis suivant la revendication 1, 2 ou 3, caractérisé par le fait que l'élément de serrage (13) est décalé par rapport au centre (15) du bouton.

5. Châssis suivant une ou plusieurs des revendications 1 à 4, caractérisé par le fait qu'au niveau du point de fixation (14), les pièces (4,5,6) à réunir possèdent respectivement seulement un élément profilé en forme de bouton (10,11,12) et seulement un élément de serrage (13).
